# EUROPEAN PATENT APPLICATION

(11) **EP 4 715 929 A1**
(43) Date of publication of application: **25.03.2026**
(21) Application number: 24807280.3
(22) Date of filing: 17.05.2024
(51) Int. Cl.: H01M 10/0562, H01M 10/052

(54) **SOLID ELECTROLYTE SHEET AND ALL-SOLID-STATE BATTERY**

(30) Priority: 17.05.2023 JP 2023081187
(71) Applicant: Maxell, Ltd., Kyoto 618-8525 (JP)
(72) Inventor: KAMIZORI, Haruki, Otokuni-gun, Kyoto 618-8525 (JP); TOMITA, Kentaro, Otokuni-gun, Kyoto 618-8525 (JP)
(74) Representative: Diehl & Partner
(86) International application number: PCT/JP2024/018276
(87) International publication number: WO 2024/237330

(57) **Abstract**

Provided are a highly reliable all-solid-state battery and a solid electrolyte sheet that can form a part of the all-solid-state battery. A solid electrolyte sheet according to the present invention has a porous substrate, and a solid electrolyte retained on the porous substrate, and the solid electrolyte sheet includes: a solid electrolyte layer A containing a solid electrolyte a that reacts with metallic lithium to oxidize lithium; and a solid electrolyte layer B containing a solid electrolyte b that is less reactive with metallic lithium than the solid electrolyte a, and the solid electrolyte layer B is disposed on at least one surface of the solid electrolyte sheet. An all-solid-state battery according to the present invention includes: a positive electrode; a negative electrode; and a solid electrolyte layer, and the solid electrolyte layer is the solid electrolyte sheet according to the present invention, and the solid electrolyte layer B of the solid electrolyte sheet faces the negative electrode.

## Description

### Technical Field

The present invention relates to a highly reliable all-solid-state battery, and a solid electrolyte sheet that can form a part of the all-solid-state battery.

### Background Art

In recent years, the development of portable electronic devices such as cellular phones and laptop personal computers, the practical use of electric vehicles, and the like have led to the need for compact and lightweight batteries that have a high capacity and a high energy density.

Currently, in lithium batteries, especially lithium-ion batteries, that can meet this demand, a lithium-containing composite oxide such as lithium cobalt oxide (LiCoO₂) or lithium nickel oxide (LiNiO₂) is used as a positive electrode active material, graphite or the like is used as a negative electrode active material, and an organic electrolyte solution containing an organic solvent and a lithium salt is used as a nonaqueous electrolyte.

Due to further development of devices that use lithium-ion batteries, there is a demand for lithium-ion batteries having an increased life-span, a higher capacity, and a higher energy density, and a high degree of reliability is also required for the lithium-ion batteries having an increased life-span, a higher capacity, and a higher energy density.

However, since an organic electrolyte solution used in a lithium-ion battery contains a flammable organic solvent, the organic electrolyte solution may abnormally generate heat when an abnormal situation such as a short circuit occurs in the battery. In recent years, as the energy density of lithium-ion batteries and the amount of organic solvent in the organic electrolyte solution have increased, there is growing need for reliability in lithium-ion batteries.

Under these circumstances, all-solid-state lithium batteries (all-solid-state batteries) without using organic solvents have been considered. An all-solid-state lithium battery includes, instead of conventional organic solvent-based electrolytes, a molded body made of a solid electrolyte in which no organic solvents are used, and it is highly reliable because there is no risk of the solid electrolyte abnormally generating heat. Therefore, in particular, there are great expectations for all-solid-state lithium batteries in product areas in which high-capacity secondary batteries are required.

Also, all-solid-state batteries are very safe as well as being highly reliable and highly environmentally resistant, and they have an increased life-span. Therefore, it is anticipated that all-solid-state batteries will become maintenance-free batteries that can continue to contribute to the development of society, as well as to safety and security. Providing all-solid-state batteries to society will contribute to reaching the following goals of the 17 Sustainable Development Goals (SDGs) established by the United Nations: Goal 3 (to ensure healthy lives and promote well-being for all people of all ages), Goal 7 (to ensure access for all people to affordable, reliable, sustainable and modern energy), Goal 11 (to achieve inclusive, safe, resilient and sustainable cities and human settlements), and Goal 12 (to ensure sustainable production and consumption patterns).

Further, various studies have been carried out on all-solid-state batteries as well. For example, Patent Documents 1 to 4 propose that a solid electrolyte sheet having both lithium ion conductivity and strength is obtained by filling pores of a base member made of a porous substrate such as a nonwoven fabric with a solid electrolyte, and that an all-solid-state secondary battery is formed using this solid electrolyte sheet.

In particular, Patent Document 4 discloses that the mechanical strength of a solid electrolyte sheet can be increased by setting the thickness of the porous substrate to 70% or more of the thickness of the entire solid electrolyte sheet, and even when the area of the solid electrolyte sheet is increased, it is possible to prevent damage to the solid electrolyte and the solid electrolyte from falling from the porous substrate.

### Prior Art Documents

### Patent Document

[Patent Document 1] JP 2015-153460A
[Patent Document 2] JP 2016-139482A
[Patent Document 3] WO 2019/208347
[Patent Document 4] WO 2020/054081

### Disclosure of Invention

### Problem to be Solved by the Invention

With the technique described in Patent Document 4, it is possible to increase the size of all-solid-state batteries, thereby achieving higher capacity. However, when attempts are made to increase the capacity of an all-solid-state battery, it is more likely that issues such as short circuits caused by deposition of lithium dendrites during charging will arise. Therefore, the reliability of all-solid-state batteries needs to be increased to further favorably inhibit the aforementioned issues from arising even when attempts are made to achieve high capacity.

The present invention was made in view of the above-described circumstances, and aims to provide a highly reliable all-solid-state battery, and a solid electrolyte sheet that can form a part of the all-solid-state battery.

### Means for Solving Problem

A solid electrolyte sheet according to the present invention has a porous substrate and a solid electrolyte retained on the porous substrate, and the solid electrolyte sheet includes: a solid electrolyte layer A containing a solid electrolyte a that reacts with metallic lithium to oxidize lithium; and a solid electrolyte layer B containing a solid electrolyte b that is less reactive with metallic lithium than the solid electrolyte a, wherein the solid electrolyte layer B is disposed on at least one surface of the solid electrolyte sheet.

In addition, an all-solid-state battery according to the present invention includes: a positive electrode; a negative electrode; and a solid electrolyte layer, wherein the solid electrolyte layer is the solid electrolyte sheet according to the present invention, and the solid electrolyte layer B of the solid electrolyte sheet faces the negative electrode.

### Effects of the Invention

According to the present invention, it is possible to provide a highly reliable all-solid-state battery and a solid electrolyte sheet that can form a part of the all-solid-state battery.

### Brief Description of Drawings

[FIG. 1] FIG. 1 is a cross-sectional view schematically showing an example of a solid electrolyte sheet according to the present invention.
[FIG. 2] FIG. 2 is a cross-sectional view schematically showing another example of the solid electrolyte sheet according to the present invention.
[FIG. 3] FIG. 3 is a cross-sectional view schematically showing an example of an all-solid-state battery according to the present invention.
[FIG. 4] FIG. 4 is a graph showing a voltage change during charge/discharge cycles of a cell in which a solid electrolyte sheet of Comparative Example 1 is used.

### Description of the Invention

### <Solid electrolyte sheet>

A solid electrolyte sheet according to the present invention has a porous substrate and a solid electrolyte retained on the porous substrate, and the solid electrolyte sheet includes a solid electrolyte layer A containing a solid electrolyte a that reacts with metallic lithium to oxidize lithium and a solid electrolyte layer B containing a solid electrolyte b that is less reactive with metallic lithium than the solid electrolyte a, and the solid electrolyte layer B is disposed on at least one surface of the solid electrolyte sheet.

In an all-solid-state battery having the solid electrolyte sheet according to the present invention as a solid electrolyte layer, even when lithium dendrites are deposited on the surface of the negative electrode during charging, the growth of lithium dendrites within the solid electrolyte layer (solid electrolyte sheet) is inhibited by the solid electrolyte a that reacts with the metallic lithium contained in the solid electrolyte layer A to oxidize lithium, and lithium dendrites are inhibited from reaching the positive electrode. Therefore, by using the solid electrolyte sheet according to the present invention, it is possible to form an all-solid-state battery capable of suppressing the occurrence of short-circuiting caused by the deposition of lithium dendrites.

In addition, the solid electrolyte sheet according to the present invention also has, in addition to the solid electrolyte layer A, the solid electrolyte layer B containing the solid electrolyte b, which is less reactive with metallic lithium than the solid electrolyte a, and this solid electrolyte layer B can contain, for example, the solid electrolyte b, such as a sulfide-based solid electrolyte having, for example, an argyrodite-type structure. Therefore, in the solid electrolyte sheet according to the present invention, favorable lithium-ion conductivity can be ensured by the solid electrolyte layer B while the growth of lithium-ion dendrites in the solid electrolyte layer A is efficiently suppressed. Therefore, in the all-solid-state battery having the solid electrolyte sheet according to the present invention (the all-solid-state battery according to the present invention), it is possible to suppress the occurrence of short-circuiting caused by lithium dendrites while ensuring favorable battery characteristics, thereby improving reliability.

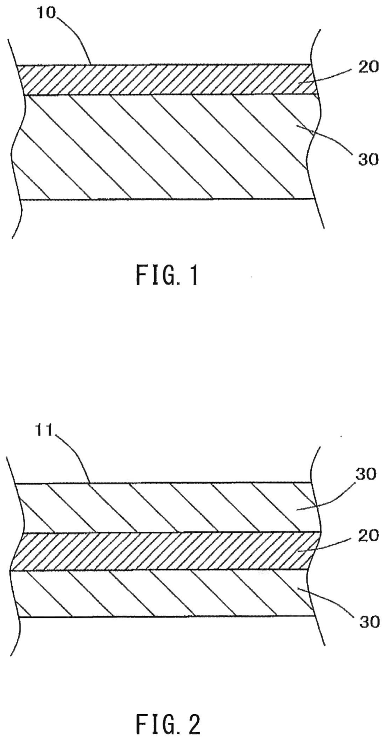

FIGS. 1 and 2 show cross-sectional views schematically showing examples of a solid electrolyte sheet. A solid electrolyte sheet 10 shown in FIG. 1 is a sheet having a two-layer structure including a solid electrolyte layer A20 containing a solid electrolyte a that reacts with metallic lithium to oxidize lithium, and a solid electrolyte layer B30 containing a solid electrolyte b that is less reactive with metallic lithium than the solid electrolyte a. The solid electrolyte sheet 10 includes a porous substrate, and the solid electrolyte layer A20 and the solid electrolyte layer B30 share the porous substrate. Also, the solid electrolyte layer A20 is formed such that the solid electrolyte a is retained in pores of the porous substrate in at least a portion of the solid electrolyte layer A20. Further, the solid electrolyte layer B30 is formed such that the solid electrolyte b is retained in pores of the porous substrate in at least a portion of the solid electrolyte layer B30.

The solid electrolyte sheet 11 in FIG. 2 is a sheet having a three-layer structure including the solid electrolyte layers B30 and B30 on the upper side and the lower side of the solid electrolyte layer A20 in FIG. 2. The solid electrolyte sheet 11 also includes a porous substrate, and the solid electrolyte layer A20 and the two solid electrolyte layers B30 and B30 share the porous substrate. Also, the solid electrolyte layer A20 is formed such that the solid electrolyte a is retained in pores of the porous substrate in the entire solid electrolyte layer. Further, the two solid electrolyte layers B30 and B30 are formed such that the solid electrolyte b is retained in pores of the porous substrate in at least portions of the solid electrolyte layers B30.

As shown in FIGS. 1 and 2, in the solid electrolyte sheet, the solid electrolyte layer B is disposed on at least one surface of the solid electrolyte sheet. When an all-solid-state battery is formed by using the solid electrolyte sheet as a solid electrolyte layer, the battery reaction is inhibited when the solid electrolyte a comes into contact with the negative electrode. Therefore, when forming an all-solid-state battery, the solid electrolyte layer B is disposed on at least one surface of the solid electrolyte sheet because the solid electrolyte layer B of the solid electrolyte sheet needs to face the negative electrode.

Although an end of the porous substrate may be exposed on a surface of the solid electrolyte sheet together with the solid electrolyte, it is preferable that the surface of the solid electrolyte sheet and its vicinity are free of the porous substrate and are constituted by only the solid electrolyte (and a binder and the like, which will be described later). Specifically, the porous substrate may be present throughout the solid electrolyte sheet in the thickness direction thereof. However, in order to prevent the porous substrate from inhibiting ion conduction at the interfaces between the positive electrode and the solid electrolyte sheet and between the negative electrode and the solid electrolyte sheet, it is preferable that the porous substrate is present only in a portion (inner side of the solid electrolyte sheet) in the solid electrolyte layer A and the solid electrolyte layer B, which are disposed on the surface of the solid electrolyte sheet, and the surface of the solid electrolyte sheet and its vicinities are made of the solid electrolyte (and a binder and the like). In other words, in the solid electrolyte sheet, the surface of the porous substrate is preferably covered with the solid electrolyte (and a binder and the like).

Note that in the case of a solid electrolyte sheet having a two-layer structure as shown in FIG. 1, a configuration may be adopted in which the porous substrate is present in a portion or the entirety of one of the solid electrolyte layer A and the solid electrolyte layer B, and the porous substrate is not present in the other solid electrolyte layer (the other solid electrolyte layer is made only of the solid electrolyte (and a binder and the like)). In the case of a solid electrolyte sheet having a three-layer structure as shown in FIG. 2, a configuration may be adopted in which the porous substrate is present in a portion or the entirety of one of the two solid electrolyte layers B, and the porous substrate is not present in the other solid electrolyte layer B (the solid electrolyte layer is made only of the solid electrolyte (and a binder and the like)).

The solid electrolyte layer A of the solid electrolyte sheet contains the solid electrolyte a, which reacts with metallic lithium to oxidize lithium, and the solid electrolyte contains at least one element selected from Ti, Ge, Sn, Al and Si, for example. Specific examples of such solid electrolytes include La_{0.05}Li_{0.35}TiO₃ (LLTO), Li_{1.5}Al_{0.5}Ge_{1.5}(PO₄)₃ (LAGP), Li₁₀SnP₂S₁₂ (LSPS), Li_{1.4}Al_{0.5}Ti_{1.6}(PO₄)₃ (LATP), Li₁₀GeP₂S₁₂ (LGPS), and Li₂O-Al₂O₃-SiO₂-P₂O₅-TiO₂.

In addition, the solid electrolyte layer A may contain, in addition to the solid electrolyte layer a, the solid electrolyte b, which is less reactive with metallic lithium than the solid electrolyte a (e.g., a mixture of the solid electrolyte a and the solid electrolyte b may be added to the solid electrolyte layer A). Examples of the solid electrolyte b include various solid electrolytes, which will be mentioned as examples below. Among such solid electrolytes, it is preferable to use a sulfide-based solid electrolyte, and it is more preferable to use a solid electrolyte having an argyrodite-type structure, because the lithium-ion conductivity of the solid electrolyte layer A can be improved and characteristics of all-solid batteries formed using the solid electrolyte sheet can be further enhanced.

When the solid electrolyte layer A contains the solid electrolyte b together with the solid electrolyte a, from the viewpoint of ensuring a favorable effect of suppressing the growth of lithium dendrites, the content of the solid electrolyte a in the entire solid electrolyte contained in the solid electrolyte A is preferably 10% by mass or more, more preferably 20% by mass%, and particularly preferably 40% by mass or more.

Since only the solid electrolyte a may be used as a solid electrolyte in the solid electrolyte layer A, the upper limit of the content of the solid electrolyte a in the entire solid electrolyte contained in the solid electrolyte layer A is 100% by mass. However, from the viewpoint of ensuring a favorable effect by using the solid electrolyte b together with the solid electrolyte a in the solid electrolyte layer A (e.g., the effect of improving lithium-ion conductivity), the content of the solid electrolyte a in the entire solid electrolyte contained in the solid electrolyte layer A is preferably 90% by mass or less, and more preferably 80% by mass or less.

There is no particular limitation on the solid electrolyte b contained in the solid electrolyte layer B as long as the solid electrolyte b has lower reactivity with metallic lithium than the solid electrolyte a, preferably has little or no action of reacting with metallic lithium to oxidize lithium, and has lithium-ion conductivity, and for example, a sulfide-based solid electrolyte, a hydride-based solid electrolyte, a halide-based solid electrolyte, and the like can be used. The solid electrolyte of the solid electrolyte layer B may be constituted by only the solid electrolyte b, and may also contain the solid electrolyte a to an extent that the battery reaction is not inhibited.

Examples of the sulfide-based solid electrolytes include particles of Li₂S-P₂S₅-based glass, Li₂S-SiS₂-based glass, Li₂S-P₂S₅-GeS₂-based glass, Li₂S-B₂S₃-based glass, or the like. In addition, it is possible to use sulfide-based solid electrolytes having an argyrodite-type structure (Li_{7-f+g}PS_{6-f}Cl_{f+g} (where f and g satisfy 0.05 ≤ g ≤ 0.9, and -3.0f + 1.8 ≤ g ≤ -3.0f + 5.7), such as Li₆PS₅Cl), and Li₇₋ₕPS₆₋ₕClᵢBrⱼ (where h, i, and j satisfy h = i + j, 0< h ≤ 1.8, and 0.1 ≤ i/j ≤ 10.0), which have attracted attention in recent years due to their high lithium-ion conductivity.

Examples of the hydride-based solid electrolytes include LiBH₄, and solid solutions of LiBH₄ and a following alkali metal compound (e.g., solid solutions in which the mole ratio between LiBH₄ and the alkali metal compound is 1:1 to 20:1). At least one selected from the group consisting of lithium halides (e.g., LiI, LiBr, LiF, and LiCl), rubidium halides (e.g., RbI, RbBr, RbF, and RbCl), cesium halides (e.g., CsI, CsBr, CsF, and CsCl), lithium amides, rubidium amides, and cesium amides can be used as the alkali metal compound in the above-mentioned solid solution.

Examples of the halide-based solid electrolytes include monoclinic LiAlCl₄, defect spinel or layered LiInBr₄, and monoclinic Li₆₋₃ₘYₘX₆ (where m satisfies 0 < m < 2 and X = Cl or Br), and it is possible to use known solid electrolytes disclosed in WO 2020/070958 and WO 2020/070955, and the like.

As the solid electrolyte b in the solid electrolyte layer B, the solid electrolytes listed above may be used alone or in combination of two or more. Among these solid electrolytes, sulfide-based solid electrolytes are preferable because sulfide-based solid electrolytes have high lithium-ion conductivity, sulfide-based solid electrolytes containing Li and P are more preferable, and in particular, sulfide-based solid electrolytes having an argyrodite-type structure and having high lithium-ion conductivity and high chemical stability are even more preferable.

The solid electrolyte contained in the solid electrolyte layer A and the solid electrolyte contained in the solid electrolyte layer B are preferably in the form of particles, and the particles have an average particle size of preferably 5 µm or less, and more preferably 2 µm or less, from the viewpoint of further improving the ability to fill pores of the porous substrate, and ensuring favorable lithium-ion conductivity and the function of suppressing the growth of lithium dendrites. Note that if the solid electrolyte particles are too small, there is a risk that handleability will deteriorate. Also, as will be described later, the solid electrolyte particles are preferably bound using a binder in order to retain the particles in the pores of the porous substrate or to make the particles adhere well to the surface of the porous substrate. However, depending on the case, a large amount of binder may be required and the resistance value may increase. Therefore, the average particle diameter of the solid electrolyte particles is preferably 0.3 µm or more, and more preferably 0.5 µm or more.

The average particle diameter of solid electrolyte particles used in this specification and other particles (a positive electrode active material, a negative electrode active material or the like) refers to the value of the 50% diameter (D₅₀) in a volume-based integrated fraction when the integrated volume is calculated based on particles with a small particle size, using a particle size distribution measuring device (Microtrac particle size analyzer "HRA9320" manufactured by Nikkiso Co., Ltd., etc.).

The porous substrate of the solid electrolyte sheet may be made of a fibrous article, such as woven fabric, nonwoven fabric, or mesh, with nonwoven fabric being particularly preferable.

The fiber diameter of a fibrous article that constitutes the porous substrate is preferably 5 µm or less, and preferably 0.5 µm or more.

There is no particular limitation on the material of the fibrous article as long as it does not react with metallic lithium and has insulating properties. It is possible to use resins such as polyolefins (e.g., polypropylene and polyethylene); polystyrene; aramid; polyamide-imide; polyimide; nylon; polyesters such as polyethylene terephthalate (PET); polyarylate; cellulose and modified cellulose, and the like. Further, inorganic materials such as glass, alumina, silica, and zirconia may also be used. A preferable material is polyarylate. The fibrous article may be made of one or two or more of the materials listed above. Further, the porous substrate may be constituted by only fibrous articles made of the same material, or may be constituted by fibrous articles made of two or more different materials.

The weight per area of the porous substrate is preferably 10 g/m² or less, and more preferably 8 g/m² or less such that a sufficient amount of the solid electrolyte can be retained so as to be able to ensure favorable lithium-ion conductivity and a favorable function of suppressing the growth of lithium dendrites, and is preferably 3 g/m² or more, and more preferably 4 g/m² or more from the viewpoint of ensuring sufficient strength.

It is preferable to bind the solid electrolyte using a binder in order to increase the shape retention of the solid electrolyte sheet by favorably retaining the solid electrolyte in pores of the porous substrate, or improving the adhesion of the solid electrolyte covering the surface of the porous substrate to the porous substrate in the solid electrolyte sheet.

The binder for the solid electrolyte sheet is desirably a binder that does not react with the solid electrolyte, and at least one resin selected from the group consisting of butyl rubber, chloropyrene rubber, acrylic resin, and fluoropolymer is preferably used.

Also, the thickness of the solid electrolyte sheet is preferably 5 µm or more and more preferably 10 µm or more, and is preferably 50 µm or less, and more preferably 30 µm or less, from the viewpoint of optimizing the distance between the positive electrode and the negative electrode of a battery in which the solid electrolyte sheet is used, and suppressing the occurrence of short-circuiting and an increase in resistance.

When the solid electrolyte covering the surface of the porous substrate has the thickness as described above, the thickness of the porous substrate in the solid electrolyte sheet is preferably 85% or less of the thickness of the solid electrolyte sheet, and more preferably 80% or less thereof, from the viewpoint of ensuring a better effect of suppressing lithium dendrite deposition that causes charging abnormalities, in addition to smoothing the movement of lithium ions on the positive electrode side and smoothing the movement of lithium ions on the negative electrode side.

Note that the porous substrate functions as a component for improving the shape retention of the solid electrolyte sheet. When the thickness ratio of the porous substrate to the solid electrolyte sheet is too small, the shape retention of the solid electrolyte sheet may deteriorate. Also, when the thickness ratio of the porous substrate to the solid electrolyte sheet is large to a certain extent, in addition to smoothing the movement of lithium ions on the positive electrode side and smoothing the movement of lithium ions on the negative electrode side, the effect of suppressing metal deposition that causes charging abnormalities is more noticeable. Therefore, for these reasons, the thickness of the porous substrate is preferably 30% or more of the thickness of the solid electrolyte sheet, and it is more preferably 50% or more thereof.

A specific thickness of the porous substrate is, for example, preferably 3 µm or more, more preferably 8 µm or more, and preferably 45 µm or less, and more preferably 25 µm or less.

In addition, the thickness of the solid electrolyte layer A (when the solid electrolyte sheet has a plurality of solid electrolyte layers A, the total thickness thereof) is preferably 5 µm or more, and more preferably 10 µm or more, from the viewpoint of ensuring a favorable effect of suppressing the growth of lithium dendrites. Note that the upper limit of the thickness of the solid electrolyte layer A is set within a range in which the aforementioned appropriate thickness of the solid electrolyte sheet and the aforementioned appropriate thickness of the solid electrolyte layer B are satisfied.

In addition, the thickness of the solid electrolyte layer B (when the solid electrolyte sheet has a plurality of solid electrolyte layers B, the total thickness thereof) is preferably 5 µm or more, and more preferably 10 µm or more, from the viewpoint of ensuring favorable lithium-ion conductivity. The upper limit of the thickness of the solid electrolyte layer B is set within a range in which the aforementioned appropriate thickness of the solid electrolyte sheet and the aforementioned appropriate thickness of the solid electrolyte layer A are satisfied.

The percentage of the porous substrate to the solid electrolyte sheet (the percentage of actual volume excluding the pores) is preferably 30% by volume or less, and more preferably 25% by volume or less, from the viewpoint of ensuring favorable lithium-ion conductivity. Note that, when the percentage of the porous substrate to the solid electrolyte sheet is too small, the effect of improving the shape retention of the solid electrolyte sheet may deteriorate. Therefore, from the viewpoint of further increasing the strength of the solid electrolyte sheet, the percentage of the porous substrate to the solid electrolyte sheet is preferably 5% by volume or more, and more preferably 10% by volume or more.

Also, from the viewpoint of further improving the shape retention of the solid electrolyte sheet, the content of the binder in the solid electrolyte sheet is preferably 0.5% by mass or more and more preferably 1% by mass or more with respect to the total amount of the solid electrolyte and the binder. Also, from the viewpoint of limiting the amount of binder to some extent and suppressing deterioration in lithium-ion conductivity, the content of the binder in the solid electrolyte sheet is preferably 5% by mass or less, and more preferably 3% by mass or less.

Although there is no particular limitation on a method for producing a solid electrolyte sheet, it is preferable to produce a solid electrolyte sheet using a method including a process of preparing a slurry for forming the solid electrolyte layer A and a slurry for forming the solid electrolyte layer B and the like by dispersing the solid electrolyte and a binder used as needed in a solvent, and successively filling, in a wet process, pores of the porous substrate with these slurries (filling process). When a surface portion of the solid electrolyte sheet is constituted by the solid electrolyte layer A or the solid electrolyte layer B in which no porous substrate is present, the pores of the porous substrate may be filled with the slurries in the filling process, and coating films of these slurries may be formed on the surface of the porous substrate. Such a method improves the strength of the solid electrolyte sheet, and it facilitates the production of a solid electrolyte sheet having a large area.

A coating method such as a screen printing method, a doctor blade method, or an immersion method can be adopted as a method for filling the pores of the porous substrate with a slurry containing a solid electrolyte and further forming the slurry coating film on the surface of the porous substrate.

The slurry is prepared by introducing the solid electrolyte, and a binder as needed, into a solvent, and mixing the resulting mixture. It is preferable to select a slurry solvent that is less likely to deteriorate a solid electrolyte. In particular, the sulfide-based solid electrolytes and the hydride-based solid electrolytes cause chemical reactions with a minute amount of water, and therefore, it is preferable to use non-polar aprotic solvents such as hydrocarbon solvents including hexane, heptane, octane, nonane, decane, decaline, toluene, and xylene. In particular, it is more preferable to use a super dehydrated solvent in which the water content is reduced to 0.001% by mass (10 ppm) or less. It is also possible to use fluorine-based solvents such as "Vertrel (registered trademark)" manufactured by Du Pont-Mitsui Fluorochemicals Co., Ltd., "Zeorora (registered trademark)" manufactured by Zeon Corporation, and "Novec (registered trademark)" manufactured by Sumitomo 3M Limited, and nonaqueous organic solvents such as dichloromethane and diethyl ether.

The solid electrolyte sheet can be obtained by filling the pores of the porous substrate with the slurry as described above, and further forming a slurry coating film on the surface of the porous substrate, and then removing the slurry solvent through drying, and performing compression molding as needed.

Note that, as described above, the method for producing the solid electrolyte sheet is not limited to the above wet process. For example, when pores of the porous substrate are filled with a solid electrolyte (and a binder used as needed), the pores may be filled with the solid electrolyte or a mixture of the solid electrolyte and a binder in a dry process, and compression molding may be performed. Also, in a case where the surface of the porous substrate is covered with the solid electrolyte, a sheet obtained by molding a mixture of the solid electrolyte and the binder may be attached to the surface of a sheet obtained by filling pores of the porous substrate with the solid electrolyte.

### <All-solid-state battery>

An all-solid-state battery according to the present invention includes: a positive electrode; a negative electrode; and a solid electrolyte layer, and the solid electrolyte layer is the solid electrolyte sheet according to the present invention, and the solid electrolyte layer B of the solid electrolyte sheet faces the negative electrode. The all-solid-state battery according to the present invention includes a primary battery and a secondary battery.

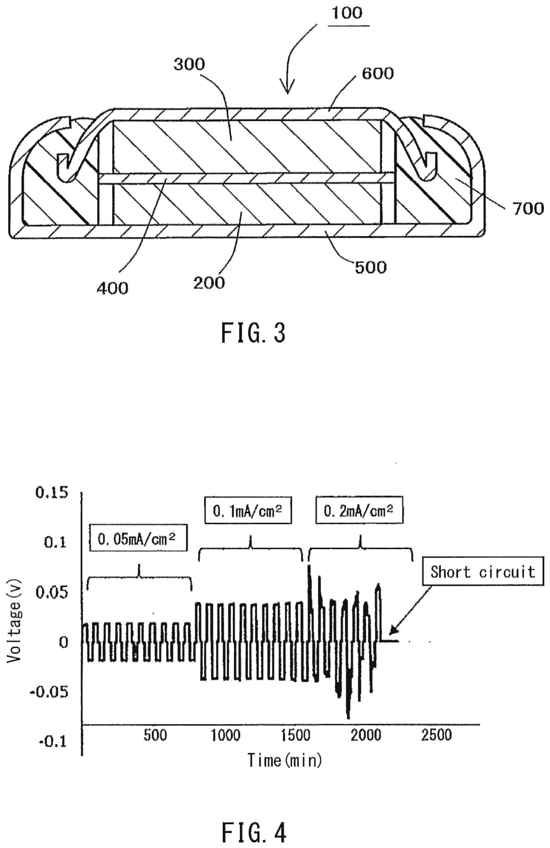

FIG. 3 is a cross-sectional view schematically showing an example of the all-solid-state battery according to the present invention. A battery 100 shown in FIG. 3 includes an exterior body constituted by an exterior can 500, a sealing can 600, and a resin gasket 700 interposed between these cans, and a positive electrode 200, a negative electrode 300, and a solid electrolyte sheet 400 interposed between the positive electrode 200 and the negative electrode 300 are enclosed in the exterior body.

The sealing can 600 is fitted into an opening of the exterior can 500 via the gasket 700, and an opening end of the exterior can 500 is tightened inward, which causes the gasket 700 to abut against the sealing can 600, thereby sealing the opening of the exterior can 500 and creating an airtight structure inside the battery.

The exterior can and the sealing can may be made of, e.g., stainless steel. The gasket may be made of, e.g., polypropylene or nylon. When heat resistance is required in relation to the intended use of a battery, the gasket may also be made of heat-resistant resin with a melting point of more than 240°C. Examples of the heat resistance resin include: fluororesins such as a tetrafluoroethylene-perfluoroalkoxyethylene copolymer (PFA); polyphenylene ether (PEE); polysulfone (PSF); polyarylate (PAR); polyether sulfone (PES); polyphenylene sulfide (PPS); and polyetheretherketone (PEEK). Moreover, when the battery is used for applications requiring heat resistance, the exterior body can be sealed by a glass hermetic seal.

Next, constituent elements of the all-solid-state battery other than the solid electrolyte sheet will be described.

### (Positive electrode)

Examples of the positive electrode of the all-solid-state battery include a positive electrode having a structure in which a layer (a positive electrode mixture layer) constituted by a molded body made of the positive electrode mixture containing the positive electrode active material and the solid electrolyte is formed on a current collector, a positive electrode constituted only by a molded body made of the positive electrode mixture (pellet or the like), a positive electrode in which pores of a conductive porous substrate are filled with a positive electrode mixture containing a positive electrode active material and a solid electrolyte, and the like.

As a positive electrode active material in a case where the all-solid-state battery is a primary battery, it is possible to use the same positive electrode active material that is used in conventionally known nonaqueous electrolyte primary batteries or the like. Specifically, examples thereof include manganese dioxide, lithium-containing manganese oxides [e.g., LiMn₃O₆, composite oxides, which have the same crystal structure (B-type structure, γ-type structure, or a structure in which β-type and γ-type are mixed) as manganese dioxide, and in which the Li content is 3.5% by mass or less, preferably 2% by mass or less, more preferably 1.5% by mass or less, and particularly preferably 1% by mass or less, or the like], lithium-containing composite oxides such as LiₐTi_{5/3}O₄ (4/3 ≤ a < 7/3); vanadium oxide; niobium oxide; titanium oxide; sulfides such as iron disulfide; graphite fluoride; silver sulfides such as Ag₂S; and nickel oxides such as NiO₂.

Also, it is possible to use the same positive electrode active material that is used in conventionally known nonaqueous electrolyte secondary batteries or the like in a case where the all-solid-state battery is a positive electrode of a secondary battery. Specific examples of the positive electrode active material include one or two or more types of particles of various positive electrode active materials used in conventionally known nonaqueous electrolyte secondary batteries, such as spinel-type lithium manganese composite oxides represented by LiMᵣMn₂₋ᵣO₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and r satisfies 0 ≤ r ≤ 1), layered compounds represented by LiᵣMn₍₁₋ₛ₋ᵣ₎NiₛMₜO₍₂₋ᵤ₎Fᵥ (where M is at least one element selected from the group consisting of Co, Mg, Al, B, Ti, V, Cr, Fe, Cu, Zn, Zr, Mo, Sn, Ca, Sr, and W, and r, s, t, u, and v satisfy 0.8 ≤ r ≤ 1.2, 0 < s < 0.5, 0 ≤ t ≤ 0.5, u + v < 1, -0.1 ≤ u ≤ 0.2, and 0 ≤ v ≤ 0.1), lithium cobalt composite oxides represented by LiCo₁₋ᵣMᵣO₂ (where M is at least one element selected from the group consisting of Al, Mg, Ti, V, Cr, Zr, Fe, Ni, Cu, Zn, Ga, Ge, Nb, Mo, Sn, Sb, and Ba, and r satisfies 0 ≤ r ≤ 0.5), lithium nickel composite oxides represented by LiNi₁₋ᵣMᵣO₂ (where M is at least one element selected from the group consisting of Al, Mg, Ti, Zr, Fe, Co, Cu, Zn, Ga, Ge, Nb, Mo, Sn, Sb, and Ba, and r satisfies 0 ≤ r ≤ 0.5), olivine-type composite oxides represented by Li₁₊ₛM₁₋ᵣNᵣPO₄Fₛ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and r and s satisfy 0 ≤ r ≤ 0.5, 0 ≤ s ≤ 1), and pyrophosphate compounds represented by Li₂M₁₋ᵣNᵣP₂O₇ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and r satisfies 0 ≤ r ≤ 0.5).

In a case where the all-solid-state battery is a secondary battery, the average particle size of the positive electrode active material is preferably 1 µm or more, more preferably 2 µm or more, and preferably 10 µm or less, and more preferably 8 µm or less. Note that the positive electrode active material may be primary particles or secondary particles obtained through aggregation of primary particles. When a positive electrode active material having an average particle diameter in the above range is used, a large interface with the solid electrolyte contained in the positive electrode can be obtained, thus enhancing output characteristics of the battery.

In a case where the all-solid-state battery is a secondary battery, it is preferable that the positive electrode active material includes, on its surface, a reaction suppressing layer for suppressing a reaction between the positive electrode active material and the solid electrolyte contained in the positive electrode.

If the positive electrode active material comes into direct contact with the solid electrolyte in the positive electrode, there is a risk that the solid electrolyte will be oxidized and a resistive layer will be formed, which will lead to a reduction in ion conductivity in the positive electrode. It is possible to suppress a reduction in ion conductivity in the positive electrode due to oxidation of the solid electrolyte by providing the reaction suppressing layer for suppressing a reaction with the solid electrolyte on the surface of the positive electrode active material to prevent direct contact between the positive electrode active material and the solid electrolyte.

The reaction suppressing layer is only required to be made of a material that has ion conductivity and can suppress a reaction between the solid electrolyte and particles of the electrode active material (the positive electrode active material). Examples of materials that can form the reaction suppressing layer include oxides that include Li and at least one element selected from the group consisting of Nb, P, B, Si, Ge, Ti, Zr, Ta, and W or more specifically, Nb-containing oxides such as LiNbO₃, and Li₃PO₄, Li₃BO₃, Li₂SO₄, Li₄SiO₄, Li₄GeO₄, LiTiO₃, LiZrO₃, and Li₂WO₄. The reaction suppressing layer may contain only one of these oxides, two or more of these oxides, or a composite compound formed by two or more of these oxides. Among these oxides, Nb-containing oxides are preferably used, and LiNbO₃ is more preferably used.

Preferably, 0.1 to 1.0 part by mass of the reaction suppressing layer is present on the surface of the positive electrode active material relative to 100 parts by mass of the positive electrode active material. When the amount of the reaction suppressing layer is within this range, it is possible to favorably suppress a reaction between the positive electrode active material and the solid electrolyte.

The reaction suppressing layer can be formed on the surface of the positive electrode active material using a sol-gel method, a mechano-fusion method, a CVD method, a PVD method, an ALD method, or the like.

The content of the positive electrode active material in the positive electrode mixture is preferably 60% by mass to 85% by mass from the viewpoint of further increasing the energy density of the all-solid-state battery.

It is possible to add a conductive assistant to the positive electrode mixture. Specific examples thereof include carbon materials such as graphite (natural graphite, artificial graphite), graphene, carbon black, carbon nanofiber, and carbon nanotubes. Note that, for example, in a case where Ag₂S is used as an active material, conductive Ag is generated during the discharge reaction, and thus a conductive assistant does not need to be added. When a conductive assistant is added to the positive electrode mixture, the content of the conductive assistant is preferably 1.0 part by mass or more, and is preferably 7.0 parts by mass or less, and more preferably 6.5 parts by mass or less, where the content of the positive electrode active material is 100 parts by mass.

It is possible to add a binder to the positive electrode mixture. Specific examples thereof include fluoropolymers such as polyvinylidene fluoride (PVDF). Note that, for example, in a case where favorable moldability can be ensured when a positive electrode is formed without using a binder as in the case where a sulfide-based solid electrolyte is added to the positive electrode mixture (details will be described later), a binder does not need to be added to the positive electrode mixture.

In a case where the positive electrode mixture requires a binder, the binder content is preferably 15% by mass or less, and preferably 0.5% by mass or more. On the other hand, when moldability of the positive electrode mixture can be obtained without the need for a binder, the binder content is preferably 0.5% by mass or less, more preferably 0.3% by mass or less, and even more preferably 0% by mass (i.e., no binder is added).

It is possible to add a solid electrolyte to the positive electrode mixture.

There is no particular limitation on the solid electrolyte added to the positive electrode mixture as long as the solid electrolyte has lithium-ion conductivity, and for example, solid electrolytes that are the same as the solid electrolyte b or the solid electrolyte a in the solid electrolyte sheet and the like can be used. In particular, sulfide-based solid electrolytes are preferable because they have high lithium-ion conductivity and also function to improve the moldability of the positive electrode mixture, and sulfide-based solid electrolytes having an argyrodite-type structure are more preferable.

The average particle size of the solid electrolyte is preferably 0.1 µm or more, and more preferably 0.2 µm or more, from the viewpoint of reducing grain boundary resistance, and preferably 10 µm or less, and more preferably 5 µm or less, from the viewpoint of forming a sufficient contact interface between the active material and the solid electrolyte.

From the viewpoint of further increasing the ionic conductivity in the positive electrode and further improving output characteristics of the all-solid-state battery, the content of the solid electrolyte in the positive electrode mixture is preferably 10 mass or more, and more preferably 15 mass or more, when the content of the positive electrode active material is set to 100 parts by mass. However, if the amount of the solid electrolyte in the positive electrode mixture is too large, the amounts of other components will be reduced, which may reduce effects of these components. Therefore, the content of the solid electrolyte in the positive electrode mixture is preferably 65 parts by mass or less, and more preferably 60% by mass, when the content of the positive electrode active material is 100 parts by mass.

In a case where a current collector is used in the positive electrode, as a current collector, a foil made of a metal such as aluminum, stainless steel, or the like; a sheet-like conductive porous substrate, such as a punched metal, a mesh, an expanded metal, or a foamed metal; a carbon sheet; or the like can be used. As a sheet-like conductive porous substrate, it is preferable to use a foamed metal porous body. A specific example of a foamed metal porous body is "Celmet (registered trademark)" available from Sumitomo Electric Industries, Ltd.

The positive electrode can be produced using a method for applying a positive electrode mixture-containing composition (paste, slurry, or the like) obtained by dispersing, in a solvent, the positive electrode active material and the solid electrolyte, and a conductive assistant, a binder, and the like that are to be added as needed, to the current collector, drying the composition, and then performing compression molding such as calendering as necessary, to form a molded body (positive electrode mixture layer) made of the positive electrode mixture on the surface of the current collector.

Water or an organic solvent such as N-methyl-2-pyrrolidone (NMP) can be used as the solvent in the positive electrode mixture-containing composition. However, when a solid electrolyte that is highly reactive to water is used, it is desirable to select a solvent that is less likely to deteriorate the solid electrolyte, and it is preferable to use any of the above-listed various examples of solvents for the slurry for forming a solid electrolyte sheet.

Also, in addition to the above method, a molded body made of a positive electrode mixture may be formed by compressing, using compression molding or the like, the positive electrode mixture prepared by mixing the positive electrode active material, and a solid electrolyte with a conductive assistant, a binder, and the like that are added as needed, for example. The molded body made of the positive electrode mixture obtained using such a method can also be used directly as a positive electrode as described above, or a molded body to which a current collector is press-bonded or the like can also be used as a positive electrode.

The molded body made of a positive electrode mixture (a positive electrode mixture layer) formed using a positive electrode mixture-containing composition that contains a solvent preferably has a thickness (when a current collector is provided, the thickness per side of the current collector) of 10 to 1000 µm. Further, the molded body made of a positive electrode mixture obtained through compression molding preferably has a thickness of 0.15 to 4 mm.

The current collector at the positive electrode preferably has a thickness of 0.01 to 0.1 mm.

In addition, when a conductive porous substrate is used for a positive electrode current collector, for example, the positive electrode can be produced by, for example, filling pores of the conductive porous substrate with the positive electrode mixture-containing composition, drying the substrate, and then performing compression molding such as calendering as needed.

Furthermore, a positive electrode may be produced using a method for filling, in a dry process, pores of a conductive porous substrate with a positive electrode mixture that does not contain a solvent and contains a positive electrode active material, a solid electrolyte, a conductive assistant, a binder, and the like instead of the positive electrode mixture-containing composition, and performing compression molding such as calendering as needed.

A positive electrode obtained using a method for filling pores of a conductive porous substrate with a positive electrode mixture-containing composition or a positive electrode mixture preferably has a thickness of 30 to 4000 µm.

### (Negative electrode)

A negative electrode of the all-solid-state battery includes, for example, a molded body made of a negative electrode mixture containing a negative electrode active material, a lithium sheet, or a lithium alloy sheet. Further, pores of a conductive porous substrate may be filled with a negative electrode mixture containing a negative electrode active material, and the resultant may be used as a negative electrode.

In a case where the negative electrode is a molded body made of a negative electrode mixture containing a negative electrode active material, examples thereof include a negative electrode having a structure in which a layer (a negative electrode mixture layer) constituted by the molded body made of the negative electrode mixture is formed on a current collector, a negative electrode constituted only by a molded body made of the negative electrode mixture (pellets or the like), and the like.

Examples of the negative electrode active material include carbon materials such as graphite, lithium titanium oxides (such as lithium titanate), simple substances and compounds (such as oxides) that contain elements such as Si or Sn, and alloys thereof. It is also possible to use, as negative electrode active materials, lithium metal and lithium alloys (lithium-aluminum alloy, lithium-indium alloy, and the like).

The content of the negative electrode active material in the negative electrode mixture is preferably 40% by mass to 80% by mass from the viewpoint of further increasing the energy density of the battery.

It is possible to add a conductive assistant to the negative electrode mixture. Specific examples thereof include conductive assistants that are the same as those listed above to be added to the positive electrode mixture. The content of the conductive assistant in the negative electrode mixture is preferably 10 to 30 parts by mass when the content of the negative electrode active material is 100 parts by mass.

Also, it is possible to add a binder to the negative electrode mixture. Specific examples thereof include binders that are the same as those listed above to be added to the positive electrode mixture. Note that, for example, in a case where favorable moldability can be ensured when a negative electrode mixture layer is formed without using a binder as in the case where a sulfide-based solid electrolyte is added to the negative electrode mixture (will be described later), a binder does not need to be added to the negative electrode mixture.

In a case where the negative electrode mixture requires a binder, the binder content is preferably 15% by mass or less, and preferably 0.5% by mass or more. On the other hand, in a case where moldability of the negative electrode mixture can be obtained without the need for a binder, the binder content is preferably 0.5% by mass or less, more preferably 0.3% by mass or more, and even more preferably 0% by mass (i.e., no binder is added).

It is possible to add a solid electrolyte to the negative electrode mixture. Specific examples thereof include solid electrolytes that are the same as the solid electrolyte b in the solid electrolyte sheet. Among the solid electrolytes listed above as examples, it is preferable to use sulfide-based solid electrolytes because they have high lithium-ion conductivity and also function to improve the moldability of the negative electrode mixture, and it is more preferable to use sulfide-based solid electrolytes having an argyrodite-type structure.

For the same reasons as in the case of the positive electrode mixture, the average particle size of the solid electrolyte in the negative electrode mixture is preferably 0.1 µm or more, and more preferably 0.2 µm or more, and preferably 10 µm or less, and more preferably 5 µm or less.

From the viewpoint of further increasing the ionic conductivity in the negative electrode and further improving output characteristics of the all-solid-state battery, the content of the solid electrolyte in the negative electrode mixture is preferably 30 mass or more, and more preferably 35 mass or more, when the content of the negative electrode active material is set to 100 parts by mass. However, if the amount of the solid electrolyte in the negative electrode mixture is too large, the amounts of other components will be reduced, which may reduce effects of these components. Therefore, the content of the solid electrolyte in the negative electrode mixture is preferably 130 parts by mass or less, and more preferably 110 parts by mass, when the content of the negative electrode active material is set to 100 parts by mass.

When a current collector is used in the negative electrode having a molded body made of a negative electrode mixture, as a current collector, a foil made of copper or nickel, a sheet-like conductive porous substrate, such as a punched metal, a mesh, an expanded metal, or a foamed metal, or the like; a carbon sheet; or the like can be used. As a sheet-like conductive porous substrate, it is preferable to use a foamed metal porous body. A specific example of the foamed metal porous body is "Celmet (registered trademark)" available from Sumitomo Electric Industries, Ltd.

The negative electrode can be produced using a method for applying a negative electrode mixture-containing composition (paste, slurry, or the like) obtained by dispersing, in a solvent, the negative electrode active material, and a conductive assistant, a solid electrolyte, a binder, and the like that are to be added as needed, to the current collector, drying the composition, and then performing compression molding such as calendering as necessary, to form a molded body (negative electrode mixture layer) made of the negative electrode mixture on the surface of the current collector.

Water or an organic solvent such as NMP can be used as the solvent in the negative electrode mixture-containing composition. However, when a solid electrolyte is also added to the negative electrode mixture-containing composition, it is desirable to select a solvent that is less likely to deteriorate the solid electrolyte, and it is preferable to use any of the above-listed various examples of solvents for the slurry for forming a solid electrolyte sheet.

Also, in addition to the above method, a molded body made of a negative electrode mixture may be formed by compressing, using compression molding or the like, the negative electrode mixture prepared by mixing the negative electrode active material, and a conductive assistant, a solid electrolyte, and a binder and the like that are added as needed. As described above, the molded body made of the negative electrode mixture obtained using such a method can also be used directly as a negative electrode, or a molded body to which a current collector is press-bonded or the like can also be used as a negative electrode.

The molded body made of a negative electrode mixture (a negative electrode mixture layer) formed using a negative electrode mixture-containing composition that contains a solvent preferably has a thickness (when a current collector is provided, the thickness per side of the current collector) of 10 to 1000 µm. Further, the molded body made of a negative electrode mixture obtained through compression molding preferably has a thickness of 0.15 to 4 mm.

The current collector at the negative electrode preferably has a thickness of 0.01 to 0.1 mm.

Also, in a case where a conductive porous substrate such as a punched metal is used for a negative electrode current collector, for example, the negative electrode can be produced by filling pores of the conductive porous substrate with the negative electrode mixture-containing composition, drying the substrate, and then performing compression molding such as calendering as needed. The negative electrode produced using such a method readily has high strength, thus making it possible to hold a solid electrolyte sheet with a larger area.

Furthermore, a negative electrode may be produced using a method for filling, in a dry process, pores of a conductive porous substrate with a negative electrode mixture that does not contain a solvent and contains a negative electrode active material, a solid electrolyte, a binder, a conductive assistant, and the like instead of the negative electrode mixture-containing composition, and performing compression molding such as calendering as needed.

A negative electrode obtained using a method for filling pores of a conductive porous substrate with a negative electrode mixture-containing composition or a negative electrode mixture preferably has a thickness of 30 to 4000 µm.

In a case where a negative electrode has a lithium sheet or a lithium alloy sheet, sheets constituted only by lithium sheets or lithium alloy sheets, or sheets obtained by bonding these sheets to current collectors are used.

Examples of alloying elements for lithium alloys include aluminum, lead, bismuth, indium, and gallium, and aluminum and indium are preferable. The percentage of alloying elements in a lithium alloy (in a case where the lithium alloy contains a plurality of types of alloying elements, the percentage of these alloying elements) is preferably 50 atomic% or less (in this case, the remaining portion is lithium and inevitable impurities).

Also, in a case where a negative electrode has a sheet made of a lithium alloy, a stack is prepared by stacking a layer that contains an alloying element for forming a lithium alloy on the surface of a lithium layer (a layer containing lithium) constituted by a lithium metal foil or the like through press-bonding, for example, and the negative electrode can be prepared by forming a lithium alloy on the surface of the lithium layer by bringing the stack into contact with a solid electrolyte in a battery. In the case of such a negative electrode, a stack having a layer containing an alloying element on only one surface of the lithium layer may be used, or a stack having a layer containing an alloying element on both surfaces of the lithium layer may also be used. The stack can be formed, for example, by press-bonding a lithium metal foil and a foil made of an alloying element to each other.

Further, a current collector can also be used when a lithium alloy is formed in a battery to form a negative electrode. For example, a stack having a lithium layer on one surface of a negative electrode current collector and a layer containing an alloying element on a surface of the lithium layer opposite to the negative electrode current collector may be used, or a stack having lithium layers on both surfaces of the negative electrode current collector and a layer containing an alloying element on a surface of each lithium layer opposite to the negative electrode current collector may be used. The negative electrode current collector and the lithium layer (lithium metal foil) may be stacked on each other through press-bonding or the like.

It is possible to use, for example, a foil made of these alloying elements or the like, for the layer containing the alloying element according to the stack used as a negative electrode. The thickness of the layer containing the alloying element is preferably 1 µm or more, more preferably 3 µm or more, preferably 20 µm or less, and more preferably 12 µm or less.

It is possible to use, for example, a lithium metal foil or the like for the lithium layer according to the stack used as a negative electrode. The lithium layer preferably has a thickness of 0.1 to 1.5 mm. Further, the sheet according to the negative electrode having a lithium sheet or a lithium alloy sheet also preferably has a thickness of 0.1 to 1.5 mm.

In a case where the negative electrode having a lithium sheet or a lithium alloy sheet has a current collector, it is possible to use, for the current collector, the same current collector as those listed above that can be used for a negative electrode having a molded body made of a negative electrode mixture.

### (Electrode body)

The positive electrode and the negative electrode can be used for a battery in the form of a stacked electrode body obtained by stacking these electrodes with the solid electrolyte sheet according to the present invention being located therebetween or in the form of a rolled-up electrode body obtained by rolling up the above-mentioned stacked electrode body. As mentioned above, the negative electrode faces the solid electrolyte layer B of the solid electrolyte sheet. On the other hand, as in the case where a solid electrolyte sheet having a two-layer structure as shown in FIG. 1 is used, the positive electrode can face the solid electrolyte layer A of the solid electrolyte sheet, whereas in the case where a solid electrolyte sheet having a three-layer structure as shown in FIG. 2 is used, the positive electrode can face the solid electrolyte layer B of the solid electrolyte sheet.

Note that it is preferable to form the electrode body by performing compression molding in the state in which the positive electrode, the negative electrode, and the solid electrolyte sheet are stacked, from the viewpoint of enhancing the mechanical strength of the electrode body.

### <Form of battery>

The form of all-solid-state batteries is not limited to one having an exterior body constituted by an exterior can, a sealing can, and a gasket as shown in FIG. 3, that is, one with a form generally referred to as a coin-shaped battery or a button-shaped battery. For example, the all-solid-state battery may have an exterior body constituted by a resin film or metal-resin laminate film, may have a metal tubular (cylindrical or rectangular cylindrical) exterior body having a bottom and a sealing structure that seals the opening of the can, or may have a ceramic box-shaped exterior.

### Examples

Hereinafter, the present invention will be described in detail based on examples. However, the examples below do not limit the present invention.

### (Example 1)

A nonwoven fabric [VECRUS (product name) made by Kuraray Kureflex Co., Ltd., thickness: 16 µm, basis weight: 4 g/m², tensile strength: 5 N] produced through melt blowing and constituted by liquid crystal polyester fibers made from a wholly aromatic polyester were used as an insulating porous substrate. The tensile strength per basis weight of the substrate was 1.25 N/(g/m²). A sheet A with a thickness of 18 µm that constituted the solid electrolyte layer A was produced as follows: xylene ("super dehydrated" grade) was used as a super dehydrated solvent having a water content of 0.001% by mass (10 ppm) or less, the solid electrolyte a (Li₁₀GeP₂S₁₂) having an average particle size of 1.0 µm, an acrylic resin binder, and a dispersant were mixed in a mass ratio of 100:3:1 to a solid content percentage of 40%, and a uniform slurry (slurry for forming the solid electrolyte layer A) was prepared by stirring the mixture using a Thinky mixer for 10 minutes, the nonwoven fabric was passed through the slurry and pulled out of the slurry, and the nonwoven fabric was dried in a vacuum at 120°C for 1 hour.

In addition, a sheet B with a thickness of 18 µm that constituted the solid electrolyte layer B was produced as follows: a slurry for forming the solid electrolyte layer B was prepared in the same manner as above, except that the solid electrolyte was changed to the solid electrolyte b (Li₆PS₅Cl) with an average particle size of 1.0 µm, and the same nonwoven fabric as above was passed through the slurry and pulled out of the slurry, and the nonwoven fabric was dried in a vacuum at 120°C for 1 hour.

The sheet A and the sheet B were stacked on each other, and pressure was then applied to the stack, and thus a solid electrolyte sheet in which the solid electrolyte layer A and the solid electrolyte layer B were stacked on each other was produced.

### (Example 2)

A sheet A with a thickness of 18 µm that constituted the solid electrolyte layer A was produced in the same manner as in Example 1, except that among the solid electrolytes contained in the slurry for forming the solid electrolyte layer A, 50% by mass of the solid electrolyte a was replaced with the solid electrolyte b, which was the same as the solid electrolyte used in Example 1, and the slurry was changed to a slurry containing the solid electrolyte a (Li₁₀GeP₂S₁₂) and the solid electrolyte b (Li₆PS₅Cl) in a mass ratio of 50:50. Further, using the sheet A, a solid electrolyte sheet was produced in the same manner as in Example 1 below.

### (Example 3)

A sheet A with a thickness of 18 µm that constituted the solid electrolyte layer A was produced in the same manner as in Example 1, except that among the solid electrolytes contained in the slurry for forming the solid electrolyte layer A, 80% by mass of the solid electrolyte a was replaced with the solid electrolyte b, which was the same as the solid electrolyte used in Example 1, and the slurry was changed to a slurry containing the solid electrolyte a (Li₁₀GeP₂S₁₂) and the solid electrolyte b (Li₆PS₅Cl) in a mass ratio of 20:80. Further, using the sheet A, a solid electrolyte sheet was produced in the same manner as in Example 1 below.

### (Example 4)

A sheet A with a thickness of 18 µm that constituted the solid electrolyte layer A was produced in the same manner as in Example 1, except that among the solid electrolytes contained in the slurry for forming the solid electrolyte layer A, 90% by mass of the solid electrolyte a was replaced with the solid electrolyte b, which was the same as the solid electrolyte used in Example 1, and the slurry was changed to a slurry containing the solid electrolyte a (Li₁₀GeP₂S₁₂) and the solid electrolyte b (Li₆PS₅Cl) in a mass ratio of 10:90. Further, using the sheet A, a solid electrolyte sheet was produced in the same manner as in Example 1 below.

### (Example 5)

A sheet A with a thickness of 18 µm that constituted the solid electrolyte layer A was produced in the same manner as in Example 3, except that the solid electrolyte a contained in the slurry for forming the solid electrolyte layer A was changed to Li_{1.3}Al_{0.5}Ge_{1.5}(PO₄)₃. Further, using the sheet A, a solid electrolyte sheet was produced in the same manner as in Example 1 below.

### (Example 6)

A sheet A with a thickness of 18 µm that constituted the solid electrolyte layer A was produced in the same manner as in Example 3, except that the solid electrolyte a contained in the slurry for forming the solid electrolyte layer A was changed to Li_{1.4}Al_{0.5}Ti_{1.6}(PO₄)₃. Further, using the sheet A, a solid electrolyte sheet was produced in the same manner as in Example 1 below.

### (Example 7)

A sheet A with a thickness of 18 µm that constituted the solid electrolyte layer A was produced in the same manner as in Example 3, except that the solid electrolyte a contained in the slurry for forming the solid electrolyte layer A was changed to La_{0.05}Li_{0.35}TiO₃. Further, using the sheet A, a solid electrolyte sheet was produced in the same manner as in Example 1 below.

### (Example 8)

A sheet A with a thickness of 18 µm that constituted the solid electrolyte layer A was produced in the same manner as in Example 3, except that the solid electrolyte a contained in the slurry for forming the solid electrolyte layer A was changed to Li₁₀SnP₂S₁₂. Further, using the sheet A, a solid electrolyte sheet was produced in the same manner as in Example 1 below.

### (Comparative Example 1)

Instead of stacking the sheets A and B on each other, two sheets B were stacked to produce a solid electrolyte sheet.

A cell for evaluation was produced by sandwiching both sides of each solid electrolyte sheet of the examples and comparative examples with two Li metal foils and pressing both ends of the resulting sheet using two stainless steel plates.

Each cell was charged and discharged at a current density of 0.05 mA/cm² for 10 test cycles (time per test cycle: 40 minutes for charging, 40 minutes for discharging), and the current density was changed to 0.1 mA/cm², 0.2 mA/cm², 0.4 mA/cm², and 0.8 mA/cm², in this order, and then, the charging/discharging was repeated for 10 test cycles in the same manner while the current density was changed to 1.8 mA/cm² in increments of 0.2 mA/cm², and the change in the voltage of the cell was measured during these test cycles. The charging time and the discharging time per cycle in the above charge/discharge cycle are shown in Table 1. Also, FIG. 4 shows a voltage change in the cell in which the solid electrolyte sheet of Comparative Example 1 was used.

**[Table 1]**

| Current Density (mA/cm²) | Charging Time (min) | Discharging Time (min) |
|---|---|---|
| 0.05 | 40 | 40 |
| 0.1 | 37.5 | 37.5 |
| 0.2 | 33 | 33 |
| 0.4 | 25.5 | 25.5 |
| 0.8 | 15.2 | 15.2 |
| 1.0 | 11.8 | 11.8 |
| 1.2 | 9.1 | 9.1 |
| 1.4 | 7 | 7 |
| 1.6 | 5.4 | 5.4 |
| 1.8 | 4.8 | 4.8 |

From the voltage changes shown in FIG. 4, it can be seen that the cell in which the solid electrolyte sheet of Comparative Example 1 was used short-circuited after the cell was charged in the seventh test cycle in the charge/discharge test cycles at 0.2 mA/cm². Also, the total amount of electricity during charging and discharging performed until short-circuiting occurred (the total amount of charging electricity + the total amount of discharging electricity) was 3 mAh/cm² per unit area of the electrode, and it was possible to charge and discharge the cell with the above amount of electricity before the short-circuiting.

Similarly, for the cells in which the solid electrolyte sheets of the examples were used, Table 2 shows the current density at which short-circuiting occurred and the total amount of charging and discharging electricity until short-circuiting occurred.

**[Table 2]**

| | Current density at which short-circuiting occurred (mA/cm²) | Total amount of charging and discharging electricity until short-circuiting occurred (mAh/cm²) |
|---|---|---|
| Ex. 1 | 1.8 | 28 |
| Ex. 2 | 1.6 | 25 |
| Ex. 3 | 1.2 | 18 |
| Ex. 4 | 1.0 | 15 |
| Ex. 5 | 0.8 | 10 |
| Ex. 6 | 0.8 | 11 |
| Ex. 7 | 0.8 | 9 |
| Ex. 8 | 1.0 | 14 |
| Comp. Ex. 1 | 0.2 | 3 |

In the cells in which the solid electrolyte layer sheets of Examples 1 to 8 having the stacking structure of the solid electrolyte layer A and the solid electrolyte layer B were used, the solid electrolyte layer A suppressed the growth of lithium dendrites. Thus, as shown in Table 2, short-circuiting was less likely to occur than the cell in which the solid electrolyte sheet of Comparative Example 1 was used, and the cells were charged and discharged with a larger amount of current.

Therefore, by assembling an all-solid-state battery using the solid electrolyte sheets of Examples 1 to 8 such that the solid electrolyte layer B faces the negative electrode, it is possible to construct the all-solid-state battery in which the occurrence of short-circuiting caused by lithium dendrites is suppressed.

The invention may be embodied in other forms without departing from the essential characteristics thereof. The embodiments disclosed in this application are to be considered in all respects as illustrative and not limiting. The scope of the present invention should be construed in view of the appended claims, rather than the foregoing description, and all changes that come within the meaning and range of equivalency of the claims are intended to be embraced therein.

### Industrial Applicability

An all-solid-state battery according to the present invention can be applied to the same applications as conventionally known primary batteries and secondary batteries, but the all-solid-state battery has great heat resistance because it has a solid electrolyte instead of an organic electrolyte solution. Therefore, the all-solid-state battery according to the present invention can be preferably used in applications in which the battery is exposed to high temperatures. The solid electrolyte sheet according to the present invention can form a part of the all-solid-state battery according to the present invention.

### Description of Reference Numerals

- 10, 11: Solid electrolyte sheet
- 20: Solid electrolyte layer A
- 30: Solid electrolyte layer B
- 100: All-solid-state battery
- 200: Positive electrode
- 300: Negative electrode
- 400: Solid electrolyte sheet
- 500: Exterior can
- 600: Sealing can
- 700: Gasket

## Claims

1. A solid electrolyte sheet having a porous substrate, and a solid electrolyte retained in the porous substrate, the solid electrolyte sheet comprising:
a solid electrolyte layer A containing a solid electrolyte a that reacts with metallic lithium to oxidize lithium; and
a solid electrolyte layer B containing a solid electrolyte b that is less reactive with metallic lithium than the solid electrolyte a,
wherein the solid electrolyte layer B is disposed on at least one surface of the solid electrolyte sheet.

2. The solid electrolyte sheet according to claim 1,
wherein the solid electrolyte layer B is disposed on one surface of the solid electrolyte sheet, and the solid electrolyte layer A is disposed on another surface of the solid electrolyte sheet.

3. The solid electrolyte sheet according to claim 1,
wherein the solid electrolyte layer A contains the solid electrolyte a and the solid electrolyte b.

4. The solid electrolyte sheet according to claim 1,
wherein the solid electrolyte a contains at least one element selected from Ti, Ge, Sn, Al and Si.

5. The solid electrolyte sheet according to claim 1,
wherein the solid electrolyte layer b is a sulfide-based solid electrolyte.

6. The solid electrolyte sheet according to claim 5,
wherein the sulfide-based solid electrolyte is a solid electrolyte having an argyrodite-type structure.

7. An all-solid-state battery comprising:
a positive electrode;
a negative electrode; and
a solid electrolyte layer,
wherein the solid electrolyte layer is the solid electrolyte sheet according to any one of claims 1 to 6, and
the solid electrolyte layer B of the solid electrolyte sheet faces the negative electrode.
